Europäisches Patentamt

European Patent Office

Office européen des brevets

(11) Publication number: **0 315 200 B1**

(12) **EUROPEAN PATENT SPECIFICATION**

(45) Date of publication of patent specification: **30.12.92** (51) Int. Cl.5: **B60K 17/35**, F16D 35/00, B60K 23/08, F16D 47/06

(21) Application number: **88118434.5**

(22) Date of filing: **04.11.88**

(54) **Power transmission apparatus.**

(30) Priority: **05.11.87 JP 168425/87 U**

(43) Date of publication of application:
**10.05.89 Bulletin 89/19**

(45) Publication of the grant of the patent:
**30.12.92 Bulletin 92/53**

(84) Designated Contracting States:
**AT DE FR GB IT**

(56) References cited:
**EP-A- 269 524**        **EP-A- 0 240 795**
**EP-A- 0 283 821**      **WO-A-86/02133**
**DE-A- 3 630 433**      **DE-A- 3 702 352**
**DE-A- 3 708 193**      **DE-A- 3 735 823**
**DE-C- 3 430 465**      **GB-A- 2 139 972**

(73) Proprietor: **VISCODRIVE JAPAN LTD**
**Toranomon Center Building 8th floor 16-17**
**Toranomon 1-chome Minatu-ku**
**Tokyo(JP)**

(72) Inventor: **Teraoka, Masao c/o Tochigifujisan-gyo**
**Kabushiki Kaisha 2388 Ohmiya-machi**
**Tochigi-shi Tochigi-ken(JP)**

(74) Representative: **Harwardt, Günther, Dipl.-Ing. et al**
**HARWARDT NEUMANN PATENTANWÄLTE**
**Scheerengasse 2 Postfach 1455**
**W-5200 Siegburg 2(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

## BACKGROUND OF THE INVENTION

### Field of the Invention

The present invention relates to a power transmission apparatus for a four-wheel driven vehicle, and more specifically to a power transmission apparatus of viscous coupling type provided with a clutch mechanism.

### Description of the Prior Art

Conventionally, there are various power transmission apparatus for a four-wheel driven vehicle, which can be classified according to the presence or absence of a central differential gear device for absorbing a difference in rotational speed between front and rear wheel shafts, and/or according to the number or the arrangement of differential limiting devices, etc.

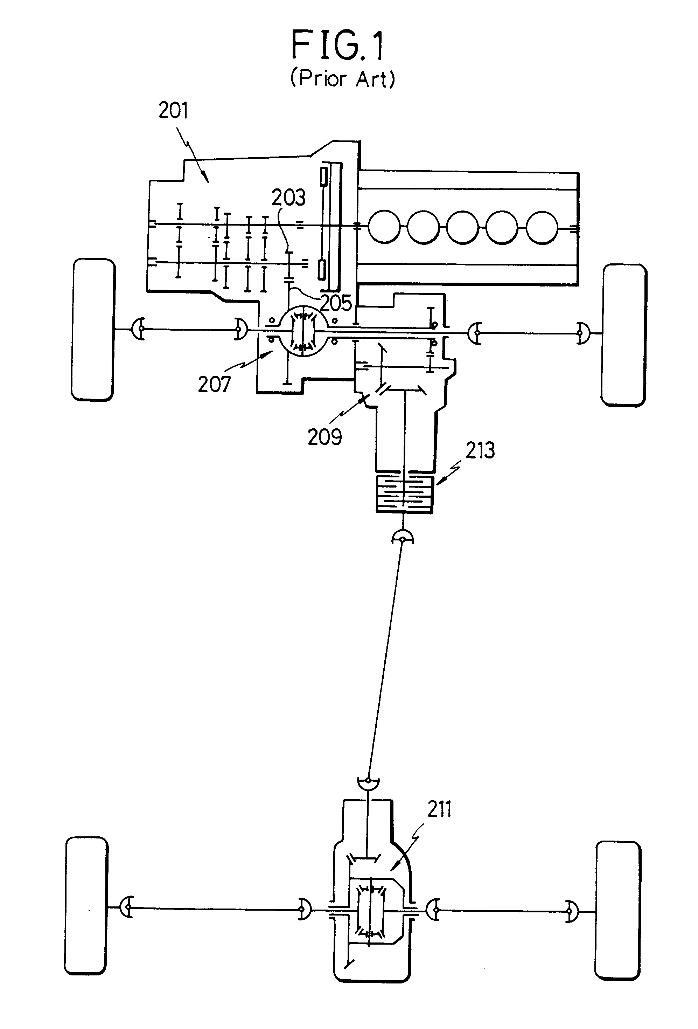

Fig. 1 shows a prior-art power transmission apparatus, which comprises of a final reduction gear 205 driven by a drive gear 203 of a transmission 201; a front wheel differential gear device 207 rotated by the final reduction gear 205; a direction converting gear assembly 209 driven by the front wheel differential gear 207 to turn the rotational direction of the driving force through right angle; and a viscous coupling device 213 and a transmission shaft to transmit the rotary force from the direction converting gear assembly 209 to the rear wheel differential gear 211.

In the power transmission apparatus as described above, since no central differential gear is incorporated to absorb only difference in rotational speed between the front and rear wheel shafts, there exists an advantage that the structure is simple. In addition, since power (torque) is transmitted to the rear wheel shafts (indirectly coupled wheel shafts) via the viscous coupling device 213, it is possible automatically to distribute torque to both the front and rear wheels in the same way as when two-wheel driving is manually switched four-wheel driving or vice versa according to road and travel conditions.

In this prior-art power transmission apparatus however, since a big difference in rotational speed will be produced between locked (e.g. front) wheel shafts and the non-locked (e.g. rear) wheel shafts when an emergency brake is applied to the four-wheel driven vehicle, a large braking force is inevitably transmitted from the locked (e.g. front) wheel shafts to the non-locked (e.g. rear) wheel shafts due to the characteristics of the viscous coupling. This problem is disadvantageous when an antiskid braking system (ABS) is provided for obtaining excellent brake characteristics by applying an appropriate braking force to each wheel shaft; that is, there exists a problem in that it is impossible to operate the antiskid braking system reliably in cooperation with the power transmission apparatus of the viscous coupling type.

On the other hand, when the vehicle is running at high speed for many hours with different tyre inflation pressures in the front and rear wheels, since a big difference in rotational speed will be produced between the front and rear wheels, there exists another problem in that a large load is applied to the viscous coupling and therefore the temperature of the silicone oil within the working chamber of the coupling rises abnormally and thus the viscous coupling may be damaged.

It has been proposed in DE-A-37 08 193 to provide a four wheel driven vehicle in which the front wheel shafts are directly driven from the engine and the rear wheel shafts are driven from the engine through a viscous coupling. The drive from the engine to the input of the viscous coupling is through a free-wheel clutch which is so arranged that when the vehicle service brakes are operated the free-wheel is unlocked so that the rear wheels may run faster than the front wheels thus avoiding rear wheel locking when the service brake is applied. This document forms the basis of the preamble of Claim 1 of the claims for France.

EP-A-0 296 527, which has an earlier priority date than the present application but which was published after the priority date of the present application, also describes a four wheel driven vehicle in which the front wheel shafts are driven directly from the engine and the rear wheel shafts are driven from the engine through a viscous coupling. In this arrangement a normally-engaged, spring-loaded clutch is arranged in series with the viscous coupling in the drive to the rear wheel shafts. When the vehicle service brakes are operated the clutch is disengaged by a hydraulic piston and cylinder device to disconnect the drive to the rear wheel shafts. This document forms the basis of the preamble of Claim 1 of the claims for Austria, Germany, Great Britain and Italy.

## SUMMARY OF THE INVENTION

It is the object of the present invention to provide a power transmission apparatus for a four wheel driven vehicle in which the torque transmission can be interrupted by a clutch operated in dependence on relative rotational displacement between two parts of the apparatus as circumstances require.

This object is achieved in a power transmission defined in the preamble of Claim 1 for the States AT, DE, GB and IT by the features specified in the characterizing part of that claim and is achieved in a power transmission defined in the preamble of Claim 1 for the State FR by the features specified in the characterizing part of that claim.

## BRIEF DESCRIPTION OF THE DRAWINGS

The features and advantages of the power transmission apparatus according to the present invention will be more clearly appreciated from the following description of the preferred embodiment of the invention taken in conjunction with the accompanying drawings and in which:

Fig. 1 is a diagram showing a four wheel driven vehicle to which a prior-art power transmission apparatus is applied;

Fig. 2 is a diagram showing a four wheel driven vehicle to which an embodiment of the present invention is applied;

Fig. 3 is an enlarged cross-sectional view showing the essential portion of the embodiment;

Fig. 4(A) is a cross-sectional view taken along the line A-A in Fig. 3; and

Fig. 4(B) is a view for assistance in explaining the cam operation.

## DETAILED DESCRIPTION OF THE PREFERRED EMBODIMENTS

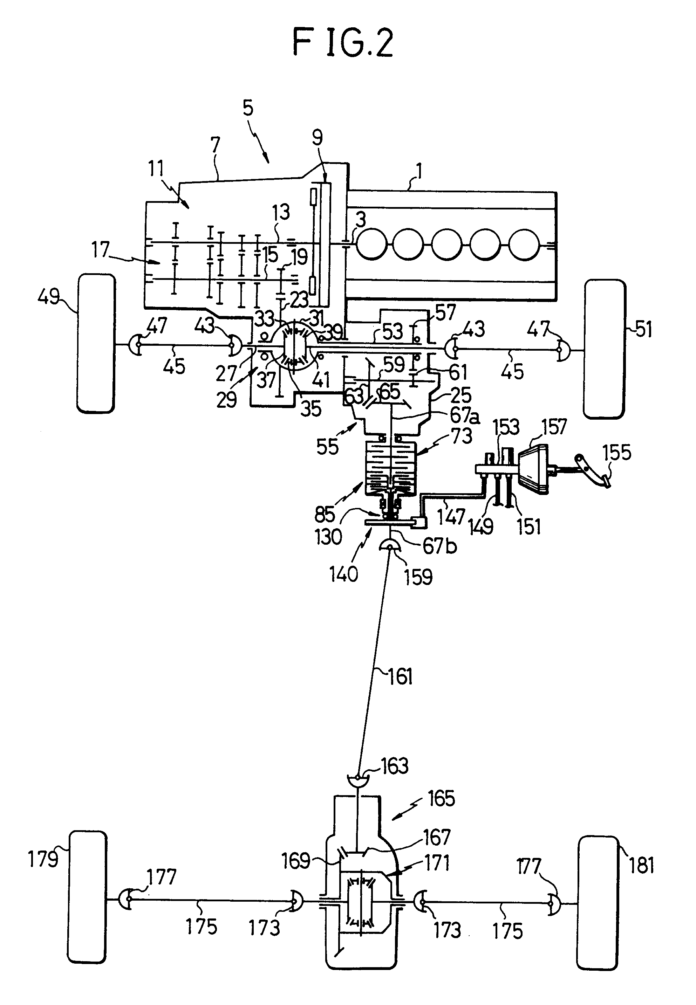

One embodiment of the present invention will be described in detail hereinbelow with reference to Figs. 2 to 4, in which the right and left directions referred to in the specification correspond to those in these drawings.

In Fig. 2, an engine 1 is arranged at the vehicle front with its crankshaft set transversely of the vehicle. A transaxle 5 housed within a transaxle casing 7 includes a transmission 11 in series with a clutch 9 and the engine 1. This transmission 11 is composed of an input shaft 13 linked to the crankshaft 3 via the clutch 9; an output shaft 15 arranged parallel to this input shaft 13; and a speed change gear assembly 17.

A drive gear 19 is provided at the right-hand end of the output shaft 15. This drive gear 19 is in mesh with a final reduction gear 23.

Within a transfer casing 25 arranged near the transaxle casing 7 or near the center of the front wheel shaft, a first (front wheel) differential gear 29 of bevel gear type is disposed coaxially with a front wheel shaft 27. The final reduction gear 23 is fixed to a casing 31 of the front wheel differential gear 29.

Within this casing 31, there is disposed a pair of pinion gears 33 and 35, rotatably attached to a shaft supported by the casing 31 perpendicular to the rotary shaft of the casing 31, and a pair of side gears 37 and 39 in mesh with the pinion gears 33 and 35. The left-hand side gear 37 is splined to the left-hand front wheel shaft 27 and the right-hand side gear 39 is splined to the right-hand front wheel shaft 41. Each of the front wheel shafts 27 and 41 is linked to the left-hand and right-hand front wheels 49 and 51 respectively via a constant velocity joint 43, a drive wheel shaft 45 and a constant velocity joint 47.

The casing 31 is linked with a direction converting gear assembly 55 (disposed within a transfer casing 25) via a first tubular transmission shaft 53 supported by the front wheel shaft 41. This direction converting gear assembly 55 comprises a power transmission gear 57 disposed at the right-hand end of the first transmission shaft 53; an intermediate gear 61 splined to the right-hand end of an intermediate shaft 59 arranged parallel to the first transmission shaft 53; the gear 61 in meshing with the power transmission gear 57; a first bevel gear 63 splined to the intermediate shaft 59 at its left-hand end; a second bevel gear 65 in mesh with the first bevel gear 63 to turn the rotary drive through a right angle; and a transmission shaft 67 for transmitting the rotational force of this second bevel gear 65 to the rear wheel shafts.

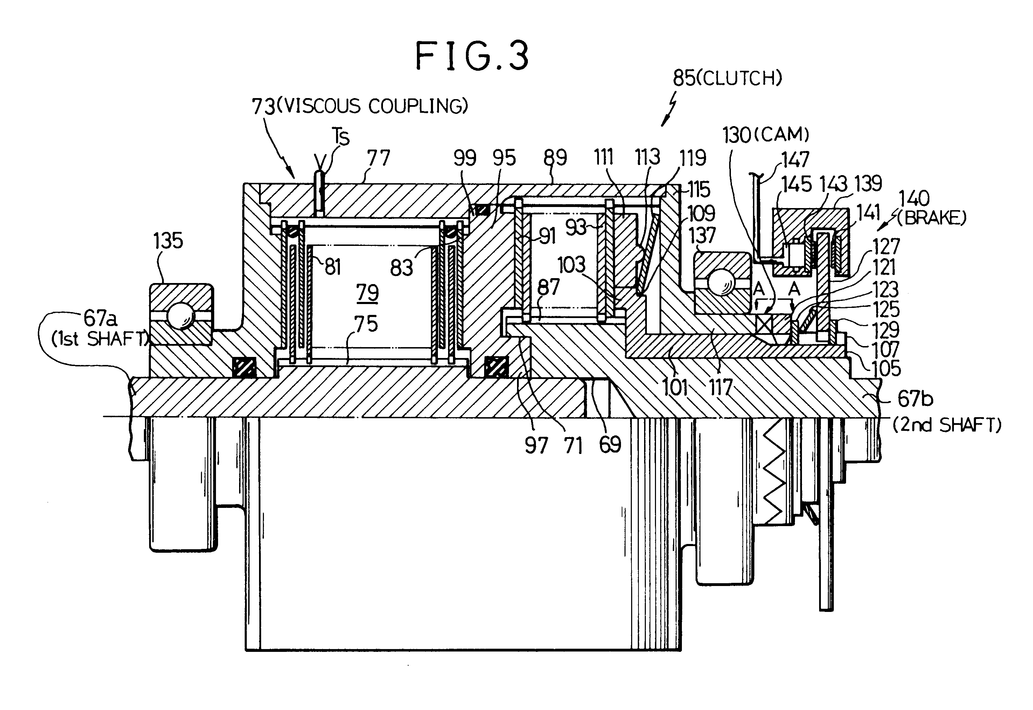

The transmission shaft 67 includes a front side (in Fig. 2) or left-hand (in Fig. 3) rotary transmission shaft 67a and a rear side (in Fig. 2) or right-hand (in Fig. 3) rotary transmission shaft 67b. As shown in Fig. 3, a small diameter bore 69 and a large diameter bore 71 are formed in the left-hand end surface of the transmission shaft 67b, and an end of the transmission shaft 67a is fitted into the small diameter bore 69 so that the two shafts 67a and 67b are co-axially rotatable relative to each other.

With reference to Fig. 3, a viscous coupling 73 is arranged on the left-hand part of the rotary transmission shaft 67a. An inner hub 75 of the viscous coupling 73 is formed by the outer surface of the transmission shaft 67a; and an outer case 77 constituting a part of the coupling case is rotatably supported by the transmission shaft 67a.

The inner hub 75 and the outer case 77 of the viscous coupling 73 form an enclosed working chamber 79 filled with viscous fluid such as silione oil of high viscocity. Within this enclosed working chamber 79, a plurality of inner plates 81 are splined to the inner hub 75 and a plurality of outer plates 83 are splined to the inner circumference of the outer case 77 and are interleaved with the plates 81.

A clutch mechanism 85 is arranged on the left-hand end of the transmission shaft 67b. An inner hub 87 of the clutch 85 is formed by the outer surface of the rotary transmission shaft 67b; and an outer case 89 constituting a part of the coupling case is formed integral with the outer case 77 of the viscous coupling 73. A plurality of clutch plates 91 are splined to the outer circumference of the inner hub 87 and a plurality of clutch plates 93 are splined to the inner circumference of the outer case 89. The plates 91 and 93 are interleaved and are axially movable to allow clutch engagement and disengagement.

Between the viscous coupling 73 and the clutch 85, there is provided a flange 95 formed with an inner diameter substantially equal to the small diameter bore 69 of the transmission shaft 67b and a cylindrical portion 97 formed with an outer diameter fitting into the larger diameter bore 71 in the transmission shaft 67b. The coupling side wall 99 of this flange 95 constitutes a right-hand wall of the working chamber 79 of the viscous coupling 73.

A slide sleeve 101 for releasing the clutch 85 comprises a flange portion 103 and a sleeve portion 105, and is rotatably fitted on to the transmission shaft 67b with the flange portion 103 in contact with the clutch plates 91 and 93. Further, a spline 107 is formed on the right-hand end on the outer circumference of the sleeve 105 and a cutout 109 is formed on the flange portion 103.

An annular plate 111 for urging the clutch plates 91 and 93 into contact with each other is loosely fitted to an outer surface of a flange portion 103 of the slide sleeve 101. This push plate 111 is formed with a circular convex portion 113 at roughly the radially middle portion thereof so as to apply a uniform force over the surface of the clutch plates 91 and 93. It is possible to form the push plate 111 and the slide sleeve 101 integral with each other.

On the right-hand side of the outer case 89 of the clutch 85, is disposed a member composed of a flange portion 115 and a cylindrical portion 117 with the cylindrical portion 117 rotatably fitted onto a sleeve portion 105 of the slide sleeve 101.

A clutch spring 119 is disposed within the outer case 89 of the clutch 85 in such a way that the outer circumferential edge thereof is in contact with the flange portion 115, the inner circumferential edge thereof is in contact with a cutout 109 of the slide sleeve 101, and the circular middle portion thereof is in contact with the convex portion 113 of the push plate 111. Under these conditions, the clutch spring 119 urges the push plate 111 and the slide sleeve 101 simultaneously to the left with a point in contact with the flange 115 as a fulcrum. Therefore, the clutch plates 91 and 93 are urged against each other between the push plate 111 and the flange 95 to provide clutch engagement. From left to right a cam ring 121, a first washer 123 and a second washer 129 are fixedly engaged with the spline 107 formed in the slide sleeve 101. A brake disk 127 is loosely engaged with the spline 107 so as to be axially movable along the spline 107 between the two washers 123 and 129. A disk-shaped spring 125 is disposed between the first washer 123 and the brake disk 123 to urge the cam ring 121 toward the cam portion of the cylindrical portion 117 via the washer 123. The washer 129 limits the rightward movement of the brake disk 127.

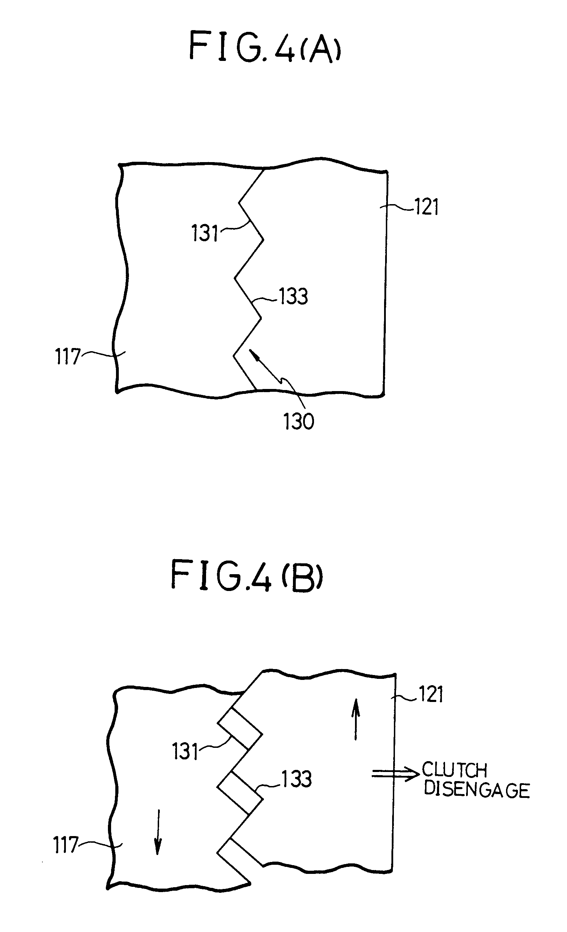

As depicted in Fig. 4(A), cam means 130 comprises a right angled cam 131 formed on an end surface of the cylindrical portion 117 disposed at the right-hand end of the outer case 89 and a right angled cam 133 formed on the cam ring 121. These two cams 131 and 133 are engaged with each other by the elastic force of the disk-shaped spring 125.

The viscous coupling 73 and the clutch 85 are rotatably supported in a vehicle via bearings 135 and 137.

A U-shaped cross-section brake frame 139 is disposed so as to sandwich the brake disk 127. A fixed brake shoe 141 is provided on one of two inner opposing surfaces of the U-shaped frame 139 and a movable brake shoe 143 is provided on the other of the two inner opposing surfaces thereof. A hydraulic cylinder 145 is provided at the rear of the movable brake shoe 143 and a hydraulic pipe 147 is connected to the cylinder 145.

With reference to Fig. 2, the hydraulic pipe 147 is connected to a master cylinder 153 to which a front wheel brake hydraulic pipe 149 and a rear wheel brake hydraulic pipe 151 are also connected. When the brake pedal 155 is depressed, the resulting force is transmitted to the master cylinder 153 via a vacuum assist 157 so as to apply a hydraulic pressure through these hydraulic pipes 147, 149 and 151. The braking means 140 is composed of the brake disk 127, the brake frame 139, the brake shoes 141 and 143, the hydraulic cylinder 145 and the hydraulic pipe 147.

The transmission shaft 67b is linked with a rear wheel final reduction gear device 165 via a universal joint 159, a propeller shaft 161, and another universal joint 163. The clutch operating means comprises of the slide sleeve 101, the cam means 130, and the brake means 140.

This rear wheel final reduction gear device 165 includes a gear assembly (a pair of bevel gears 167 and 169) for transmitting the rotational force supplied from the universal joint 163 to the rear wheel shafts after speed reduction and change it direction through a right angle, and a second (rear wheel) differential gear device 171 linked with the bevel gear 169 and rotatable coaxially with the rear wheel shafts. This rear wheel differential gear 171 is constructed in the same way as in the front wheel differential gear device 29, and linked with each of the right and left rear wheels 179 and 181 via a constant velocity joint 173, a wheel drive shaft 175 and another constant velocity joint 171.

The operation of the power transmission apparatus of the present invention thus constructed will be described hereinbelow.

Rotational power from the engine 1 is transmitted to the input shaft 13 of the transmission 11 via the clutch 9. The rotary speed of the input shaft 13 is geared down via the speed change gear assembly 17 and transmitted to the output shaft 15 to drive the final reduction gear 23 via the drive gear 19.

When the final reduction gear 23 rotates, the casing 31 of the front wheel differential gear 29 rotates. The rotational force of the casing 31 is differentially distributed by the pinion gears 33 and 35 and the side gears 37 and 39 and then transmitted to both the right and left front wheels 49 and 51, respectively via the right or left front wheel shaft 27 or 41, and the constant velocity joints 43, the wheel drive shafts 45, and the constant velocity joints 47.

The rotational force of the casing 31 of the front wheel differential gear device 29 is transmitted to the power transmission gear 57 via the first transmission shaft 53 to rotate the intermediate gear 61, and then to the transmission shaft 67a after the rotational direction has been turned through a right angle via the second bevel gear 65.

The rotational force of the transmission shaft 67a is transmitted from the inner hub 75 to the outer case 77 of the viscous coupling 73 and from the outer case 89 to the inner hub 87 of the clutch 85 to rotate the transmission shaft 67b.

The rotational force of the transmission shaft 67b is also transmitted to the rear wheel final reduction gear device 165 via the universal joint 159, the propeller shaft 161, and the universal joint 163 to rotate the rear wheel differential gear 171 after speed reduction and charge of rotational direction.

The rear wheel differential gear 171 differentially distributes the rotational force to drive the right and left rear wheels 179 and 181, respectively via the constant velocity joints 173, the rear wheel shafts 175, and the constant velocity joints 177.

When the brake pedal 155 is depressed, hydraulic pressure is applied from the master cylinder 153 to each of the hydraulic pipes 147, 149 and 151. Pressure developed in the hydraulic pipes 149 and 151 is used to brake the front and rear wheels. Pressure developed in the hydraulic pipe 147 is applied to the cylinder 145 to move the movable brake shoe 143 to the right in Fig. 3, so that the brake disk 127 is sandwiched between the movable brake shoe 143 and the fixed brake shoe 141 for braking operation. When the brake disk 127 is braked, since the cylindrical portion 117 of the outer case 89 of the clutch 85 rotates faster than the cam ring 121 fixed to the spline 107 of the slide sleeve 101, the cam 131 rotates over the cam 133 against the elastic force of the disk-shaped spring 125 as shown in Fig. 4(B). As a result, a thrust force to move the cam ring 121 in the rightward direction in Fig. 4(B) is produced, and therefore the slide sleeve 101 is slid along the shaft 67b to the right to disengage the clutch 85 against the elastic force of the clutch spring 119. Accordingly, torque transmission intermitted between the first rotary transmission shaft 67a and the second rotary transmission shaft 67b is interrupted.

When the clutch 85 is engaged, since the front and rear wheel shafts are connected via the viscous coupling 73, when the vehicle is running with a small difference in rotary speed between the front and rear wheels, the vehicle is driven substantially by two-wheel drive operation. However, when the difference in rotary speed between the front and rear wheels increases, since a large torque is transmitted to the rear wheels, the vehicle is driven in four-wheel drive mode. The above switching operation from two- to four-wheel drive operation or vice versa is effected automatically.

When the vehicle is started or accelerated, since the centre of gravity of the vehicle shifts rearward, a large load is applied to the rear wheels. However, since a large torque is applied to the rear wheels due to the difference in rotational speed between the front and rear wheels, it is possible effectively to accelerate the vehicle.

When the vehicle sticks in the mud and therefore the front or rear wheels slip or stick, since a larger torque is applied to either of the front or rear wheels, it is possible for the vehicle to escape these conditions.

When the vehicle is put into a garage at a low speed, since a difference in rotary speed between the front and rear wheels can be absorbed by the viscous coupling 73, no tight-corner braking phenomenon will occur.

When the vehicle is braked for an emergency stop and therefore the front or rear wheels are locked, a major part of the brake force is transmitted to the non-locked wheels via the viscous coupling 73 to brake the non-locked wheels. This phenomenon is disadvantageous when an antiskid braking system (ABS) is provided for controllably distributing braking force to each wheel. To overcome the above-mentioned problem, the torque transmission from the front wheels to the rear wheels is interrupted by the clutch 85 in the present invention.

Since the torque transmission can be interrupted by the clutch 85, it is possible to protect the viscous coupling 73 from excessive load when fluid temperature rises abnormally.

In this embodiment, since the operation of the clutch 85 is linked with the foot brake, the apparatus of the present invention can be incorporated in an antiskid braking system without providing additional operating means. In this case, the operation of the clutch 85 is operative for a short time, the energy loss due to clutch operation for the power transmission apparatus is small.

In the above embodiment, a disk brake is used for the clutch operating means. It is also possible to select another appropriate brake system such as drum or band, under consideration of cost or space. In this case, the hydraulic elements for controlling the clutch mechanism 85 will be eliminated.

If balls are used between the cylindrical portion 117 of the outer case 89 and the cam means 130 (the cam ring 121), it is possible to generate a large thrust force by a small braking force.

The hydraulic pressure for operating the braking means 140 can be provided separately from the foot brake system. In this case, it is possible to engage or disengage the clutch mechanism independently from the brake system.

A temperature sensor Ts may be provided in the viscous coupling 73 to disengage the clutch when the fluid temperature in the coupling rises beyond a predetermined value, so as automatically to protect the viscous coupling 73 from an excessive load. In this case, hydraulic pressure is applied from a hydraulic source to the hydraulic cylinder 145 via an appropriate valve, for instance, opened in response to a signal generated from the temperature sensor Ts when the fluid temperature rises beyond a predetermined value.

As described above, the power transmission apparatus of the present invention can be incorporated in an antiskid braking system, in spite a simple construction, and can protect the viscous coupling from excessive load.

## Claims

**Claims for the following Contracting States : AT, DE, GB, IT**

1. A power transmission apparatus, comprising
    (a) a first rotary transmission shaft (67a);
    (b) a second rotary transmission shaft (67b) rotatably and coaxially arranged with respect to said first rotary transmission shaft;
    (c) a coupling case comprising first and second outer cases (77, 89) rotatably and coaxially disposed around said first and second rotary transmission shafts in such a way as to form an enclosed working chamber (79) in the first outer case (77) in which a viscous coupling device (73) is arranged for coupling said first rotary transmission shaft (67a) to said first outer case (77);

    (d) a clutch housing formed by the second outer case (89) between said second rotary transmission shaft (67b) and said first outer case (77);
    (e) a clutch (85), disposed within the clutch housing, for coupling and decoupling said coupling case (77, 89) with or from said second rotary transmission shaft (67b) and including a push plate (111);
    (f) spring means (119) arranged to urge said push plate (111) to engage the clutch (85);
    (g) clutch disengaging means comprising a slide sleeve (101) rotatably and coaxially arranged with respect to the second rotary transmission shaft (67b) and movable axially with respect thereto, said slide sleeve (101) engaging the spring means, and actuating means (130, 140) to move the slide sleeve (101) axially to disable the spring means (119) to release the clutch (85);

    characterised in that
    (h) said actuating means comprises complementary cam means (130) carried by the coupling case (77, 89) and the slide sleeve (101) respectively and braking means (140) selectively operable to brake the slide sleeve (101) thus to cause relative rotational displacement between the slide sleeve and the coupling case when the clutch (85) is engaged and the coupling case is rotating, such displacement causing the cam means on the coupling case and the slide sleeve respectively to move relative to one another thus moving the slide sleeve axially to disable the spring means and thus to disengage the clutch.

2. The power transmission apparatus according to Claim 1, wherein the cam means (130) comprise
    (a) a cam portion (131) formed on an end surface of a cylindrical portion (117) of the coupling case (77, 89) and
    (b) a cam ring (121) fixed to the slide sleeve (101) and engaging the cam portion (131) of the cylindrical portion (117).

3. The power transmission apparatus according to Claim 1 or Claim 2 wherein the braking means (140) comprise
    (a) a brake disk (127) spline-coupled to said slide sleeve (101) so as to be circumferentially fixed but axially movable with respect to said slide sleeve (101) and
    (b) a U-shaped brake frame (139) including a movable brake shoe (143) and a fixed brake shoe (141) between which shoes said brake disk (127) is sandwiched, so that when said braking means is operated to brake said brake disk, said slide sleeve (101) is moved axially with respect to said second rotary transmission shaft (67b) by said cam ring (121) engaging with said cam portion (131) of said cylindrical portion (117) to disable the spring means thus disengaging the clutch (85) and decoupling said second rotary transmission shaft (67b) from said coupling case.

4. The power transmission apparatus according to any one of the preceding claims mounted in a vehicle having a braking system wherein said braking means (140) is operated when the foot brake in the vehicle braking system is operated, thus disengaging the clutch (85) and decoupling said coupling case (77, 89) from said second rotary transmission shaft (67b).

5. The power transmission apparatus according to any one of the proceding claims including a temperature sensor (Ts) to sense the temperature within the working chamber (79) and fluid-pressure-operated means arranged, when the temperature within the chamber (79) rises beyond a predetermined temperature, to operate the braking means (140) to disengage the clutch (85) thus decoupling said coupling case (77, 89) from said second rotary transmission shaft (67b).

**Claims for the following Contracting State : FR**

1. A power transmission apparatus, comprising
    (a) a first rotary transmission shaft (67a);
    (b) a coupling case comprising a first outer case (77) rotatably and coaxially disposed around said first rotary transmission shaft in such a way as to form an enclosed working chamber (79) in which a viscous coupling device (73) is arranged for coupling said first rotary transmission shaft (67a) to said outer case (77);
    (c) a clutch (85) associated with the viscous coupling;

    characterised in that
    (d) a second rotary transmission shaft (67b) is rotatably and coaxially arranged with respect to said first rotary transmission shaft (67a);
    (e) a second outer case (89) forming part of said coupling case forms a clutch housing between said second rotary transmission shaft (67b) and said first outer case (77);
    (f) said clutch (85) is disposed within the clutch housing and arranged for coupling and decoupling said coupling case (77, 89) with or from said second rotary transmission shaft (67b), the clutch including a push plate (111);
    (g) spring means (119) are arranged to urge said push plate (111) to engage the clutch (85); and
    (h) clutch disengaging means are provided which comprise a slide sleeve (101) rotatably and coaxially arranged with respect to the second rotary transmission shaft (67b) and movable axially with respect thereto, said slide sleeve (101) engaging the spring means, actuating means (130, 140) operable by relative rotational displacement between the slide sleeve (101) and the coupling case (77, 89) to move the slide sleeve (101) axially to disable the spring means (119) to release the clutch (85), and braking means (140) selectively operable to cause said relative rotational displacement when the clutch 85) is engaged and the coupling case (77, 89) is rotating.

2. The power transmission according to Claim 1, wherein the actuating means comprises complementary cam means (130) carried by the coupling case (77, 89) and the slide sleeve (101) respectively, the occurrence of said relative rotational displacement causing the cam means on the coupling case and the slide sleeve respectively to move relative to one another thus moving the slide sleeve axially to disable the spring means and thus to disengage the clutch.

3. The power transmission apparatus according to Claim 2, wherein the cam means (130) comprise
    (a) a cam portion (131) formed on an end surface of a cylindrical portion (117) of the coupling case (77, 89); and
    (b) a cam ring (121) fixed to the slide sleeve (101) and engaging the cam portion (131) of the cylindrical portion (117).

4. The power transmission apparatus according to any one of the preceding claims wherein said braking means (140) comprises
    (a) a brake disk (127) spline-coupled to said slide sleeve (101) so as to be circumferentially fixed but axially movable with respect to said slide sleeve (101); and
    (b) a U-shaped brake frame (139) including a movable brake shoe (143) and a fixed brake shoe (141) between which shoes said brake disk (127) is sandwiched, so that when said braking means is operated to brake said brake disk, said slide sleeve (101) is moved axially with respect to said second rotary transmission shaft (67b) by said cam ring (121) engaged with said cam portion (131) of said cylindrical portion (117) to disable the spring means thus disengaging the clutch (85) and decoupling said second rotary transmission shaft (67b) from said coupling case.

5. The power transmission apparatus according to any one of the preceding claims mounted in a vehicle having a braking system, wherein said braking means (140) is operated when the foot brake in the vehicle braking system is operated thus disengaging the clutch (85) and decoupling said coupling case (77, 89) from said second rotary transmission shaft (67b).

6. The power transmission apparatus according to any one of the preceding claims including a temperature sensor (Ts) to sense the temperature within the working chamber (79) and fluid-pressure-operated means arranged, when the temperature within the chamber (79) rises beyond a predetermined temperature, to operate the braking means (140) to disengage the clutch (85) thus decoupling said coupling case (77, 89) from said second rotary transmission shaft (67b).

**Patentansprüche**
**Patentansprüche für folgende Vertragsstaaten : AT, DE, GB, IT**

1. Eine Kraftübertragungseinrichtung mit
   a) einer ersten rotierenden Antriebswelle (67a);
   b) einer zweiten umlaufenden Antriebswelle (67b), die drehbar und koaxial zur ersten genannten rotierenden Antriebswelle angeordnet ist;
   c) einem Kupplungsgehäuse aus ersten und zweiten äußeren Gehäuseteilen (77, 89), die drehbar und koaxial um die genannten ersten und zweiten rotierenden Antriebswellen derart angeordnet sind, daß im ersten äußeren Gehäuseteil (77) ein abgeschlossener Arbeitsraum (79) entsteht, in dem eine Viskokupplungsvorrichtung (73) , zur Verbindung der genannten ersten rotierenden Antriebswelle (67a) mit dem genannten ersten äußeren Gehäuseteil (77) angeordnet ist;
   d) einem Schaltkupplungsgehäuse, das durch das zweite äußere Gehäuseteil (89) zwischen der genannten zweiten rotierenden Antriebswelle (67b) und dem genannten ersten äußeren Gehäuseteil (77) gebildet wird;
   e) einer im Schaltkupplungsgehäuse angeordneten Schaltkupplung (85) zum Verbinden und Trennen des genannten Kupplungsgehäuses (77, 89) und der genannten zweiten rotierenden Antriebswelle (67b), und mit einer Druckplatte (111);
   f) Federmitteln (119), die so angeordnet sind, daß sie die genannte Druckplatte (111) zur eingerückten Position der Kupplung beaufschlagen;
   g) Schaltkupplungsausrückmittel, die eine drehbar und axial zur genannten zweiten rotierenden Antriebswelle (67b) angeordnete und axial zu ihr bewegliche Gleitbuchse (101) umfassen, wobei die besagte Gleitbuchse (101) gegen die Federmittel anliegt und mit Betätigungsmitteln (130, 140) zum axialen Bewegen der Gleitbuchse (101), um die Federmittel (119) außer Wirkung zu setzen, die Schaltkupplung (85) auszurücken;

   dadurch gekennzeichnet, daß
   h) die genannten Betätigungsmittel vom Kupplungsgehäuse (77, 89) und der Gleitbuchse (101) getragene komplementäre Nockenmittel (130) umfassen und Bremsmittel (140) aufweisen, die selektiv benutzt werden können, um die Gleitbuchse (101) abzubremsen, wodurch eine relative Drehverstellung zwischen der Gleitbuchse und dem Kupplungsgehäuse verursacht wird, wenn die Schaltkupplung (85) eingerückt ist und das Kupplungsgehäuse rotiert, wobei eine solche Verschiebung verursacht, daß die Nockenmittel am Kupplungsgehäuse bzw. an der Gleitbuchse sich relativ zueinander bewegen, so daß die Gleitbuchse axial verschoben wird, um die Federmittel außer Kraft zu setzen und so die Schaltkupplung auszurücken.

2. Kraftübertragungseinrichtung nach Anspruch 1, wobei die Nockenmittel (130)
   a) einen Nockenabschnitt (131) umfassen, der auf einer Endfläche eines zylindrischen Abschnitts (117) des Kupplungsgehäuses (77, 89) gebildet ist, und
   b) einen Nockenring (121) umfassen, der an der Gleitbuchse (101) befestigt ist und in den Nockenabschnitt (131) des zylindrischen Abschnitts (117) eingreift.

3. Kraftübertragungseinrichtung nach einem der Ansprüche 1 oder 2, wobei die Bremsmittel (140)
   a) eine Bremsscheibe (127) umfassen, die über eine Keilverzahnung mit der genannten Gleitbuchse (101) derart verbunden ist, daß sie zwar umfangsfest montiert, aber zur genannten Gleitbuchse axial beweglich ist und

b) einen U-förmigen Bremsrahmen (139) umfassen, der eine bewegliche Bremsbacke (143) und eine feststehende Bremsbacke (141) aufweist, zwischen denen die Bremsscheibe (127) angeordnet ist, so daß, wenn die genannten Bremsmittel zum Bremsen der genannten Bremsscheibe betätigt werden, die Gleitbuchse (101) durch den genannten Nockenring (121) axial zur genannten zweiten rotierenden Antriebswelle (67b) bewegt wird, der mit dem genannten Nockenabschnitt (131) des genannten zylindrischen Abschnitts (117) in Eingriff ist, um die Federmittel außer Kraft zu setzen und wodurch die Schaltkupplung (85) auszurücken und die genannte zweite rotierende Antriebswelle (67b) vom genannten Kupplungsgehäuse zu trennen.

4. Kraftübertragungseinrichtung nach einem der vorangehenden Ansprüche, die in einem Fahrzeug mit einem Bremssystem montiert ist, in dem die genannten Bremsmittel (140) bei Betätigung der Fußbremse des Fahrzeugbremssystems betätigt werden, wodurch dann die Schaltkupplung (85) ausgerückt wird und das Kupplungsgehäuse (77,89) von der genannten zweiten rotierenden Antriebswelle (67b) getrennt wird.

5. Kraftübertragungseinrichtung nach einem der vorangehenden Ansprüche, die einen Temperatursensor (Ts) zum Messen der Temperatur innerhalb des Arbeitsraumes (79) und druckmittelbetriebene Mittel umfaßt, die so angeordnet sind, daß sie, wenn die Temperatur im Innern des Raumes (79) über eine vorbestimmte Temperatur steigt, die Bremsmittel (140) betätigen, um die Schaltkupplung (85) auszurücken und so das genannte Kupplungsgehäuse (77, 89) von der genannten zweiten rotierenden Antriebswelle (67b) zu trennen.

**Patentansprüche für folgenden Vertragsstaat : FR**

1. Eine Kraftübertragungseinrichtung mit
a) einer ersten rotierenden Antriebswelle (67a);
b) einem Kupplungsgehäuse mit einem ersten äußeren Gehäuseteil (77), das drehbar und koaxial um die genannte erste rotierende Antriebswelle derart angeordnet ist, daß ein abgeschlossener Arbeitsraum (79) gebildet wird, in dem eine Viskokupplungsvorrichtung (73) angeordnet ist, um die genannte erste rotierende Antriebswelle (67a) mit dem genannten ersten äußeren Gehäuseteil (77) zu verbinden;
c) einer zu der Viskokupplung zugeordneten Schaltkupplung (85)

dadurch gekennzeichnet, daß
d) eine zweite rotierende Antriebswelle (67b) drehbar und koaxial zur ersten genannten rotierenden Antriebswelle (67a) angeordnet ist;
e) ein zweites äußeres Gehäuseteil (89), welches Teil des genannten Kupplungsgehäuses ist, ein Schaltkupplungsgehäuse zwischen der genannten zweiten rotierenden Antriebswelle (67b) und dem genannten ersten äußeren Gehäuseteil (77) bildet;
f) die genannte Schaltkupplung (85) im Innern des Schaltkupplungsgehäuses eingebaut und so angeordnet ist, daß sie das genannten Kupplungsgehäuse (77, 89) mit der genannten zweiten rotierenden Antriebswelle (67b) verbindet oder sie voneinander trennt, wobei die Schaltkupplung eine Druckplatte (111) umfaßt;
g) Federmittel (119) so angeordnet sind, daß sie die genannte Druckplatte (111) zur eingerückten Position der Kupplung beaufschlagen;
h) Schaltkupplungsausrückmittel vorgesehen sind, die eine drehbar und axial zur genannten zweiten rotierenden Antriebswelle (67b) angeordnete und axial zu ihr bewegliche Gleitbuchse (101) umfassen, wobei diese besagte Gleitbuchse (101) gegen die Federmittel anliegt, mit Betätigungsmitteln (130, 140), die durch relative Drehverstellung zwischen der Gleitbuchse (101) und das Kupplungsgehäuse (77, 89) betätigbar sind, um die Gleitbuchse (101) axial zu bewegen um die Federmittel (119) außer Wirkung zu setzen, um die Kupplung (85) auszurücken, und mit Bremsmitteln (140), die selektiv betätigbar sind, um die genannte relative Drehverstellung zu bewirken, wenn die Schaltkupplung (85) eingerückt ist und das Kupplungsgehäuse (77, 89) rotiert.

2. Kraftübertragungseinrichtung nach Anspruch 1, wobei die Betätigungsmittel am Kupplungsgehäuse (77, 89) bzw. der Gleitbuchse (101) angebrachte komplementäre Nockenmittel (130) umfassen, wobei das Auftreten der genannten Drehverstellung bewirkt, daß die Nockenmittel am Kupplungsgehäuse bzw. der Gleitbuchse sich relativ zueinander bewegen, so daß die Gleitbuchse axial verschoben wird, um die Federmittel außer Kraft zu setzen und so die Kupplung auszurücken.

3. Kraftübertragungseinrichtung nach Anspruch 21, wobei die Nockenmittel (130)

a) einen Nockenabschnitt (131) umfassen, der auf einer Endfläche eines zylindrischen Abschnitts (117) des Kupplungsgehäuses (77, 89) gebildet ist, und

b) einen Nockenring (121) umfassen, der an der Gleitbuchse (101) befestigt ist und in den Nockenabschnitt (131) des zylindrischen Abschnitts (117) eingreift.

4. Kraftübertragungseinrichtung nach einem der vorhergehenden Ansprüche, wobei die Bremsmittel (140)

a) eine Bremsscheibe (127) umfassen, die über eine Keilverzahnung mit der genannten Gleitbuchse (101) derart verbunden ist, daß sie zwar umfangsfest montiert ist, aber axial zur genannten Gleitbuchse beweglich ist und

b) einen U-förmigen Bremsrahmen (139) umfassen, der eine bewegliche Bremsbacke (143) und eine feststehende Bremsbacke (141) aufweist, zwischen denen die Bremsscheibe (127) angeordnet ist, so daß, wenn die genannten Bremsmittel zum Bremsen der genannten Bremsscheibe betätigt werden, die Gleitbuchse (101) durch den genannten Nockenring (121) axial zur genannten zweiten rotierenden Antriebswelle (67b) bewegt wird, der mit dem genannten Nockenabschnitt (131) des genannten zylindrischen Abschnitts (117) in Eingriff ist, um die Federmittel außer Kraft zu setzen und die Schaltkupplung (85) auszurücken und die genannte zweite rotierende Antriebswelle (67b) vom genannten Kupplungsgehäuse zu trennen.

5. Kraftübertragungseinrichtung nach einem der vorangehenden Ansprüche, die in einem Fahrzeug mit einem Bremssystem montiert ist, in dem das genannte Bremsmittel (140) bei Betätigung der Fußbremse des Fahrzeugbremssystems betätigt wird, wodurch dann die Schaltkupplung (85) ausgerückt wird und das Kupplungsgehäuse (77,89) von der genannten zweiten rotierenden Antriebswelle (67b) getrennt wird.

6. Kraftübertragungseinrichtung nach einem der vorangehenden Ansprüche, die einen Temperatursensor (Ts) zum Messen der Temperatur innerhalb des Arbeitsraumes (79) und druckmittelbetriebene Mittel umfaßt, die so angeordnet sind, daß sie, wenn die Temperatur im Innern des Raumes (79) über eine vorbestimmte Temperatur steigt, die Bremsmittel (140) betätigen, um die Schaltkupplung (85) auszurücken und so das genannte Kupplungsgehäuse (77, 89) von der genannten zweiten rotierenden Antriebswelle (67b) zu trennen.

## Revendications
## Revendications pour les Etats contractants suivants : AT, DE, GB, IT

1. Transmission, comprenant

(a) un premier arbre rotatif (67a) de transmission,

(b) un second arbre rotatif (67b) de transmission disposé coaxialement au premier arbre rotatif (67a) de transmission afin qu'il puisse tourner,

(c) un carter de couplage comprenant un premier et un second carter externe (77, 89) disposés, coaxialement et afin qu'ils puissent tourner, autour du premier et du second arbre rotatif de transmission de manière qu'il forme une chambre fermée (79) de travail disposée dans le premier carter externe (77) et dans laquelle un dispositif d'accouplement visqueux (73) est destiné à coupler le premier arbre rotatif (67a) de transmission ou carter externe (77), et

(d) un boîtier d'embrayage formé par le second carter externe (89) entre le second arbre rotatif de transmission (67b) et le premier carter externe (77),

(e) un embrayage (85), placé dons le boîtier d'embrayage, destiné à assurer le couplage du carter de couplage (77, 89) au second arbre rotatif (67b) de transmission et son découplage, et comprenant un plateau (111) de poussée,

(f) un dispositif à ressort (119) destiné à repousser le plateau de poussée (111) afin qu'il assure la mise en prise de l'embrayage (85),

(g) un dispositif de débrayage comportant un manchon coulissant (101) disposé coaxialement au second arbre rotatif (67b) de transmission afin qu'il puisse tourner et mobile axialement par rapport à cet arbre, le manchon coulissant (101) coopérant avec le dispositif à ressort, le dispositif de manoeuvre (130, 140) étant destiné à déplacer axialement le manchon coulissant (101) et à empêcher le dispositif à ressort (119) de libérer l'embrayage (85),

caractérisée en ce que

(h) le dispositif de manoeuvre comprend un dispositif à cames complémentaires (130) porté par le carter de couplage (77, 89) et le manchon coulissant (101) respectivement, et un dispositif de freinage (140) destiné à être commandé sélectivement afin qu'il freine le manchon Coulissant (101) et provoque ainsi un déplacement relatif en rotation entre le manchon coulissant et le carter de couplage lorsque l'embrayage (85) est en prise et le carter de couplage tourne, ce déplacement relatif provoquant un déplacement relatif du dispositif à cames du carter de couplage et du manchon coulissant respectivement, si bien que le manchon coulissant est déplacé axialement afin que le dispositif à ressort soit rendu inopérant et que l'embrayage soit ainsi débrayé.

2. Transmission selon la revendication 1, dans laquelle le dispositif à cames (130) comporte
(a) une partie de came (131) formée sur une surface d'extrémité d'une partie cylindrique (117) du carter de couplage (77, 89), et
(b) un anneau (121) de came fixé au manchon coulissant (101) et coopérant avec la partie de came (131) de la partie cylindrique (117).

3. Transmission selon la revendication 1 ou 2, dans laquelle le dispositif de freinage (140) comporte
(a) un disque (127) de frein couplé par des cannelures au manchon coulissant (101) afin qu'il soit fixé circonférentiellement mais mobile axialement par rapport au manchon coulissant (101), et
(b) un châssis en U (139) de frein comprenant un patin mobile (143) de train et un patin fixe (141) de frein, le disque (127) de freinage étant en placé entre les patins, si bien que, lorsque le dispositif de freinage est manoeuvré pour le freinage du disque, le manchon coulissant (101) est déplacé axialement par rapport au second arbre rotatif (67b) de transmission par l'anneau de come (121) qui est au contact de la partie de came (131) de la partie cylindrique (117) si bien que la dispositif à ressort devient inopérant et l'embrayage (85) est débrayé, et le second arbre rotatif (67b) de transmission est désaccouplé du carter de couplage.

4. Transmission selon l'une quelconque des revendications précédentes, montée sur un véhicule et ayant un circuit de freinage, dans laquelle le dispositif de freinage (140) est manoeuvré lorsque le frein à pied du circuit de freinage du véhicule est commandé si bien que l'embrayage (85) est débrayé et le carter de couplage (77, 89) est désaccouplé au second arbre rotatif (67b) de transmission.

5. Transmission selon l'une quelconque des revendications précédentes, comprenant un capteur (Ts) de température, destiné à détecter la température dans la chambre de travail (79), et un dispositif commandé par un fluide sous pression et disposé de manière que, lorsque la température dans la chambre (79) s'élève au-delà d'une température prédéterminée, il commande le dispositif de freinage (140) et débraye l'embrayage (85) et désaccouple ainsi le carter de couplage (77, 89) du second arbre rotatif (67b) de transmission.

**Revendications pour l'Etat contractant suivant : FR**

1. Transmission, comprenant
(a) un premier arbre rotatif (67a) de transmission,
(b) un carter de couplage comprenant un premier carter externe (77) disposé, coaxialement et afin qu'il puisse tourner, autour du premier arbre rotatif de transmission de manière qu'il forme une chambre fermée (79) de travail dans laquelle un dispositif d'accouplement visqueux (73) est destiné à coupler le premier arbre rotatif (67a) de transmission au carter externe (77), et
(c) un embrayage (85) associé au dispositif d'accouplement visqueux,
caractérisée en ce que
(d) un second arbre rotatif (67b) de transmission est disposé coaxialement au premier arbre rotatif (67a) de transmission afin qu'il puisse tourner,
(e) un second carter externe (89) faisant partie du carter de couplage forme un boîtier d'embrayage entre le second arbre rotatif (67b) de transmission et le premier carter externe (77),
(f) l'embrayage (85) est placé dans le boîtier d'embrayage et est destiné à assurer le couplage du carter de couplage (77, 89) au second arbre rotatif (67b) de transmission et son découplage, l'embrayage comprenant un plateau (111) de poussée,
(g) un dispositif à ressort (119) est destiné à repousser le plateau de poussée (111) afin qu'il assure la mise en prise de l'embrayage (85), et
(h) un dispositif de débrayage comporte un manchon coulissant (101) disposé coaxialement au second arbre rotatif (67b) de transmission afin qu'il puisse tourner et mobile axialement par rapport à cet arbre, le manchon coulissant (101) coopérant avec le dispositif à ressort, un dispositif de manoeuvre (130, 140) qui fonctionne par déplacement relatif en rotation entre le manchon coulissant (101) et le carter de couplage (77, 89) afin qu'il déplace axialement le manchon coulissant (101) et empêche le dispositif à ressort (119) de libérer l'embrayage (85), et un dispositif de freinage (140) destiné à être commandé sélectivement afin qu'il provoque un déplacement relatif en rotation lorsque l'embrayage (85) est en prise et le carter de couplage (77, 89) tourne.

2. Transmission selon la revendication 1, dans laquelle le dispositif de manoeuvre comprend un dispositif à cames complémentaires (130) porté par le carter de couplage (77, 89) et le manchon coulissant (101), le déplacement relatif en rotation provoquant un déplacement relatif du dispositif à cames du carter de couplage et du manchon coulissant respectivement, si bien que le manchon coulissant est déplacé axialement afin que le dispositif à ressort soit rendu inopérant et ainsi que l'embrayage soit débrayé.

3. Appareil de transmission selon la revendication 2, dans lequel le dispositif à cames (130) comporte
   (a) une partie de came (131) formée sur une surface d'extrémité d'une partie cylindrique (117) du carter de couplage (77, 89), et
   (b) un anneau (121) de came fixé au manchon coulissant (101) et coopérant avec la partie de came (131) de la partie cylindrique (117).

4. Appareil de transmission selon l'une quelconque des revendications précédentes, dans lequel le dispositif de freinage (140) comporte
   (a) un disque (127) de frein couplé par des cannelures au manchon coulissant (101) afin qu'il soit fixé circonférentiellement mais mobile axialement par rapport au manchon coulissant (101), et
   (b) un châssis en U (139) de frein comprenant un patin mobile (143) de frein et un patin fixe (141) de frein, le disque (127) de freinage étant en placé entre les patins, si bien que, lorsque le dispositif de freinage est manoeuvré pour le freinage du disque, le manchon coulissant (101) est déplacé axialement par rapport au second arbre rotatif (67b) de transmission par l'anneau de came (121) qui est au contact de la partie de came (131) de la partie cylindrique (117) si bien que le dispositif à ressort devient inopérant et l'embrayage (85) est débrayé, et le second arbre rotatif (67b) de transmission est désaccouplé du carter de couplage.

5. Appareil de transmission selon l'une quelconque des revendications précédentes, monté sur un véhicule et ayant un circuit de freinage, dans lequel le dispositif de freinage (140) est manoeuvré lorsque le frein à pied du circuit de freinage du véhicule est commandé si bien que l'embrayage (85) est débrayé et le carter de couplage (77, 89) est désaccouplé du second arbre rotatif (67b) de transmission.

6. Appareil de transmission selon l'une quelconque des revendications précédentes, comprenant un capteur (Ts) de température, destiné à détecter la température dans la chambre de travail (79), et un dispositif commandé par un fluide sous pression et disposé de manière que, lorsque la température dans la chambre (79) s'élève au-delà d'une température prédéterminée, il commande le dispositif de freinage (140) et débraye l'embrayage (85) et désaccouple ainsi le carter de couplage (77, 89) du second arbre rotatif (67b) de transmission.

# FIG.1
## (Prior Art)

# FIG.2

# FIG.3

73(VISCOUS COUPLING)
85(CLUTCH)
130(CAM)
140(BRAKE)

Ts

77  99  95  89  111  113  119
115
109
137

135

67a
(1st SHAFT)

81  83

91  93

103

87

79
75

147
145  143  139
141

127
121
123
125
129
107
105

A  A

101  117

97  71  69

67b
(2nd SHAFT)

EP 0 315 200 B1

# FIG.4(A)

# FIG.4(B)

CLUTCH
DISENGAGE